# EUROPÄISCHE PATENTSCHRIFT

(11) **EP 4 445 716 B1**
(45) Veröffentlichungstag und Bekanntmachung des Hinweises auf die Patenterteilung: **19.11.2025**
(21) Anmeldenummer: 24157268.4
(22) Anmeldetag: 13.02.2024
(51) Int. Cl.: A01F 12/16, A01D 75/18, A01F 12/26

(54) **SELBSTFAHRENDER MÄHDRESCHER**
SELF-PROPELLED COMBINE HARVESTER
MOISSONNEUSE-BATTEUSE AUTOMOTRICE

(30) Priorität: 13.04.2023 DE 102023109262
(43) Veröffentlichungstag der Anmeldung: 16.10.2024
(73) Patentinhaber: CLAAS Selbstfahrende Erntemaschinen GmbH, 33428 Harsewinkel (DE)
(72) Erfinder: Dickhausen, Henrik, 33428 Harsewinkel (DE); Gelhot, Finn, 49326 Melle (DE); Theuer, Jan, 33330 Gütersloh (DE)
(74) Vertreter: CLAAS Gruppe

(56) Entgegenhaltungen:
- EP-B1- 0 516 892
- EP-B1- 1 530 895
- EP-B1- 2 294 909
- DE-T2- 69 214 072
- US-A- 5 024 631

## Beschreibung

Die vorliegende Erfindung betrifft einen selbstfahrenden Mähdrescher gemäß dem Oberbegriff des Anspruches 1.

Ein selbstfahrender Mähdrescher ist aus der DE 21 22 402 A1 bekannt. In der DE 21 22 402 A1 ist ein unterhalb des Einzugskanals befindliches Auffangbehältnis, eine sogenannte Steinfangmulde, beschrieben. Die Steinfangmulde ist als ein einteiliges Auffangbehältnis ausgebildet, das ganzheitlich aus einem Maschinengestell des Mähdreschers entnehmbar ist. Hierzu sind Leisten unterhalb des Übergangsbereiches zwischen dem Einzugskanal und einer diesem nachgeordneten Dreschvorrichtung am Maschinengestell befestigt, die sich über die Breite des Einzugskanals erstrecken. An den Leisten liegt das Auffangbehältnis formschlüssig an. An der Unterseite des Einzugskanals ist ein endseitig abgewinkeltes Leitblech angeordnet, welches im Einzugskanal geförderte Steine in Richtung des Auffangbehältnisses ablenkt und zugleich dazu dient, das ungewollte Austreten von Korn aus dem Mähdrescher zu verhindern, indem der abgewinkelte Abschnitt des Leitblechs die korrespondierend abgewinkelte Vorderwand des Auffangbehältnisses übergreift. Nachteilig an diesem Mähdrescher ist, dass es zum einen erforderlich ist, dass die Steinfangmulde zum Entleeren vollständig entnommen werden muss, sodass ein Bediener sowohl durch das Gewicht der Steinfangmulde selbst als auch durch den Inhalt der Steinfangmulde belastet wird. Weiterhin begrenzt das vordere sich nach oben erstreckenden Leitbleche der Steinfangmulde den Schwenkbereich des Einzugskanals.

Die DE 39 14 962 A1 offenbart einen Mähdrescher mit einer oberhalb des Einzugskanals befindlichen Wartungsöffnung, durch welche die vorderen Dreschkorbsegmente des Dreschkorbs der Dreschvorrichtung herausnehmbar sind. Auch der aus der DE 39 14 962 A1 bekannte Mähdrescher weist eine Steinfangmulde auf. Das Herausnehmen der Dreschkorbsegmente durch die oberhalb des Einzugskanals befindliche Wartungsöffnung ist aufwendig, da die Dreschkorbsegmente an der Dreschtrommel vorbeigeführt werden müssen.

Die EP 1 530 895 B1, EP 2 294 909 B1, DE 692 14 072 T2 und EP 0 516 892 B1 offenbaren ebenfalls Mähdrescher mit Steinfangmulden, deren Wände zumindest teilweise abgeklappt werden können, um einen Zugang zu den Dreschkorbsegmenten freizugeben.

Ausgehend vom vorstehend genannten Stand der Technik liegt der Erfindung die Aufgabe zugrunde, einen selbstfahrenden Mähdrescher der eingangs genannten Art weiterzubilden, welcher sich durch eine wartungsfreundlichere Gestaltung auszeichnet.

Diese Aufgabe wird erfindungsgemäß durch einen selbstfahrenden Mähdrescher mit den Merkmalen des Anspruches 1 gelöst. Vorteilhafte Weiterbildungen sind Gegenstand der abhängigen Ansprüche.

Gemäß dem Anspruch 1 wird ein selbstfahrender Mähdrescher vorgeschlagen, umfassend einen durch Aktuatoren höhenverstellbaren Einzugskanal, eine dem Einzugskanal nachgeordnete Dreschvorrichtung, welche zumindest eine Dreschtrommel und zumindest einen die Dreschtrommel abschnittsweise umhüllenden Dreschkorb aufweist, sowie ein unterhalb des Einzugskanals im Übergangsbereich zwischen dem Einzugskanal und der Dreschvorrichtung angeordnetes Auffangbehältnis, in welches in einer Auffangposition des Auffangbehältnisses im Einzugskanal mitgeförderte Fremdkörper abscheidbar sind, wobei das Auffangbehältnis aus dem Übergangsbereich in Fahrtrichtung entfernbar ist. Erfindungsgemäß ist vorgesehen, dass das Auffangbehältnis um eine horizontale, quer zur Fahrtrichtung verlaufende Schwenkachse unterhalb des Auffangbehältnisses aus der Auffangposition in eine Wartungsposition, in welcher das Auffangbehältnis seinen Einbauraum im Wesentlichen vollständig freigibt, verschwenkbeweglich angeordnet ist, sodass das Auffangbehältnis nach dem Verschwenken in die Wartungsposition eine sich dabei ausbildende Wartungsöffnung zum Herausnehmen zumindest eines vorderen Dreschkorbsegmentes des Dreschkorbs freigibt.

Wesentlich ist, dass durch das Ausschwenken des gesamten Auffangbehältnisses eine größtmögliche Wartungsöffnung freigegeben wird, ohne dabei das Auffangbehältnis vollständig entnehmen zu müssen.

Insbesondere kann das Auffangbehältnis in seiner Auffangposition zumindest bodenseitig auf an einander gegenüberliegend angeordneten seitlichen Halterungen angeordneten oder ausgebildeten horizontalen Auflagesegmenten, die sich abschnittsweise quer zur Fahrtrichtung erstrecken, aufliegen. Bodenseitig aufliegen heißt hierbei, dass das Auffangbehältnis zumindest mit seinem Boden auf den seitlichen Halterungen aufliegt. Die seitlichen Halterungen sind vorzugsweise an innenseitigen Flächen von einander gegenüberliegenden Seitenwänden eines die Dreschvorrichtung umgebenden Gehäuses angeordnet. Die Halterungen sind als im Wesentlichen flächige Komponenten ausgeführt, sodass diese eine nur geringe axiale Erstreckung quer zur Fahrtrichtung aufweisen.

Den Halterungen kann zusätzlich eine Dichtungsfunktion zukommen. Hierzu kann ausgehend vom jeweiligen Auflagesegment eine der Außenkontur des Auffangbehältnisses abschnittsweise entsprechende abschnittsweise umlaufende Dichtung an den Halterungen befestigt sein. Die Halterungen ermöglichen zusammen mit den abschnittsweise umlaufenden Dichtungen einen Toleranzausgleich in Querrichtung des Mähdreschers. Zugleich kann das Auffangbehältnis funktionssicher gegen Rieselkörner, d.h. an den Seitenwänden des Auffangbehältnisses vorbeigleitende Körner, abgedichtet werden.

Gemäß einer Weiterbildung kann das Auffangbehältnis eine mittels eines einzelnen Bedienhebels betätigbare Frontklappe aufweisen, welche um eine zwischen Seitenwänden des Auffangbehältnisses angelenkte Klappenschwenkachse in Richtung des Einzugskanals in eine Offenstellung schwenkbar ist. Gegenüber dem eingangs genannten Stand der Technik besteht ein Vorteil darin, dass eine einhändige Bedienung zur Entleerung des Auffangbehältnisses nur durch das Verschwenken der Frontklappe möglich ist. Hierdurch ist der Entleervorgang des Auffangbehältnisses ergonomischer durchführbar. Zudem entfällt gegenüber dem Stand der Technik die Notwendigkeit einer vollständigen Entnahme des Auffangbehältnisses zu dessen Entleerung.

Bevorzugt kann an der Klappenschwenkachse ein sich über die Breite des Auffangbehältnisses erstreckendes Überleitblech schwenkbar angeordnet sein, welches mit seinem freien Ende durch zumindest ein an der Unterseite des Einzugskanals reversibel lösbar angeordnetes Führungselement geführt ist, um der Bewegung des Einzugskanals bei einer Höhenverstellung zu folgen.

Insbesondere kann die Frontklappe in Offenstellung an dem Überleitblech arretierbar sein. Wird der Einzugskanal bei geöffneter Frontklappe zur Höhenverstellung verfahren, wird eine Kollision beider Baugruppen verhindert, indem die an dem Überleitblech arretierte geöffnete Frontklappe zusammen mit dem Überleitblech entsprechend der Bewegung des Einzugskanals folgt.

Des Weiteren können an der Frontklappe randseitig zwei einander gegenüberliegende Konsolen angeordnet sein, in denen eine achsparallel zur Klappenschwenkachse verlaufende Welle drehbar gelagert ist, auf welcher der Bedienhebel drehbar angeordnet ist, sowie dass auf der Welle ein Hebelarm drehfest angeordnet sein kann, welcher mittels eines an dem Bedienhebel angeordneten Mitnehmers eine Schwenkbewegung des Bedienhebels auf die Welle überträgt.

Hierzu kann vorgesehen sein, dass der Bedienhebel einen ersten, kürzeren Hebelabschnitt und einen zweiten, längeren Hebelabschnitt aufweist, wobei der erste Hebelabschnitt sich ausgehend von der Welle in Richtung der Klappenschwenkachse erstreckt und der zweite Hebelabschnitt sich ausgehend von der Welle in entgegengesetzter Richtung erstreckt. Insbesondere ragt der zweite Hebelabschnitt über die Frontklappe hinaus, sodass ein hinreichend großer Hebelarm gegeben ist, um die Frontklappe insbesondere einhändig betätigen zu können.

Weiterhin kann der erste Hebelabschnitt eine der Frontklappe zugewandte, angeschrägte Anlagefläche aufweist, wobei die Neigung der Anlagefläche ausgehend von der Welle zum äußeren Ende des ersten Hebelabschnitts zunimmt. Hierdurch weist der Bedienhebel einen definierten Schwenkweg auf, bevor sich die Anlagefläche an der Frontklappe abstützt, sodass ein vom Bedienhebel aufgebrachte Kraft auf die Welle übertragen wird.

Insbesondere kann an dem Überleitblech an seiner der Klappenschwenkachse abgewandten Vorderkante ein federbelastetes Riegelelement axial verschieblich angeordnet sein, welches mit dem Bedienhebel in Offenstellung der Frontklappe arretierend in Eingriff steht. Dies hat den Vorteil, dass bei einer Bewegung des Einzugskanals die Frontklappe gemeinsam mit dem Überleitblech der Bewegung folgen kann, wodurch versehentliche Kollisionen, insbesondere beim Absenken des Einzugskanals, vermeidbar sind.

Weiter bevorzugt kann an zumindest einem freien Enden der Welle benachbart zur jeweiligen Konsole ein Hebelarm mit einem hakenförmigen Endabschnitt angeordnet sein, welcher in Geschlossenstellung der Frontklappe in eine jeweilige Öffnung von an einer jeweiligen Seitenwand des Auffangbehältnisses angeordneten Befestigungslasche eingreift und die Frontklappe somit in der Geschlossenstellung arretiert. Vorzugsweise kann an beiden freien Enden der Welle jeweils ein solcher Hebelarm angeordnet sein.

Bevorzugt kann die zu dem Bedienhebel benachbart angeordnete Konsole einen zum zweiten Hebelabschnitt im Wesentlichen parallel verlaufenden Abschnitt aufweisen, an welchem endseitig eine Zugfeder angreift, die mit ihrem gegenüberliegenden Ende an einem zwischen der Konsole und dem Bedienhebel drehfest auf der Welle angeordneten Bauteil angreift.

Insbesondere können im Bodenbereich an den Seitenwänden des Auffangbehältnisses einander gegenüberliegend zwei Schwenkhebel angelenkt sein, durch welche das Auffangbehältnis um die Schwenkachse schwenkbar ist. Hierdurch kann das Auffangbehältnis nach der Überführung in die Wartungsposition in dieser gehalten werden. Ein vollständiges Entfernen des Auffangbehältnisses, wie es der Stand der Technik vorsieht, ist nicht erforderlich.

Gemäß einer Weiterbildung kann das Auffangbehältnis mit den seitlichen Halterungen durch Befestigungsmittel, insbesondere Schraubverbindungen, lösbar verbunden sein.

Insbesondere kann zum Verschwenken des Auffangbehältnisses in die Wartungsposition das Auffangbehältnis zunächst in die Offenstellung zu überführen sein, wobei anschließend die Befestigungsmittel und das zumindest eine Führungselement zu lösen und zu entfernen sind, so dass das Auffangbehältnis aus den seitlichen Halterungen in Fahrtrichtung herausbewegbar und abschnittsweise um die Schwenkachse schwenkbar ist, bis das Auffangbehältnis an einem unterhalb der Schwenkachse angeordneten Anschlag an einem Wandabschnitt des Mähdreschers anliegt.

Die vorliegende Erfindung wird nachstehend anhand eines in den Zeichnungen dargestellten Ausführungsbeispieles näher erläutert.

Es zeigen:
- Fig. 1: eine schematische Darstellung eines selbstfahrenden Mähdreschers in Seitenansicht;
- Fig. 2: schematisch und exemplarisch eine perspektivische Ansicht eines Auffangbehältnisses in einer entriegelten Geschlossenstellung;
- Fig. 3: schematisch und exemplarisch eine perspektivische Ansicht des Auffangbehältnisses nach Fig. 2 in einer Offenstellung;
- Fig. 4: schematisch und exemplarisch eine Schnittansicht des Auffangbehältnisses in seiner Geschlossenstellung;
- Fig. 5: schematisch und exemplarisch eine Schnittansicht des Auffangbehältnisses in seiner Offenstellung; und
- Fig. 6: schematisch und exemplarisch das Auffangbehältnis in seiner Wartungsposition.

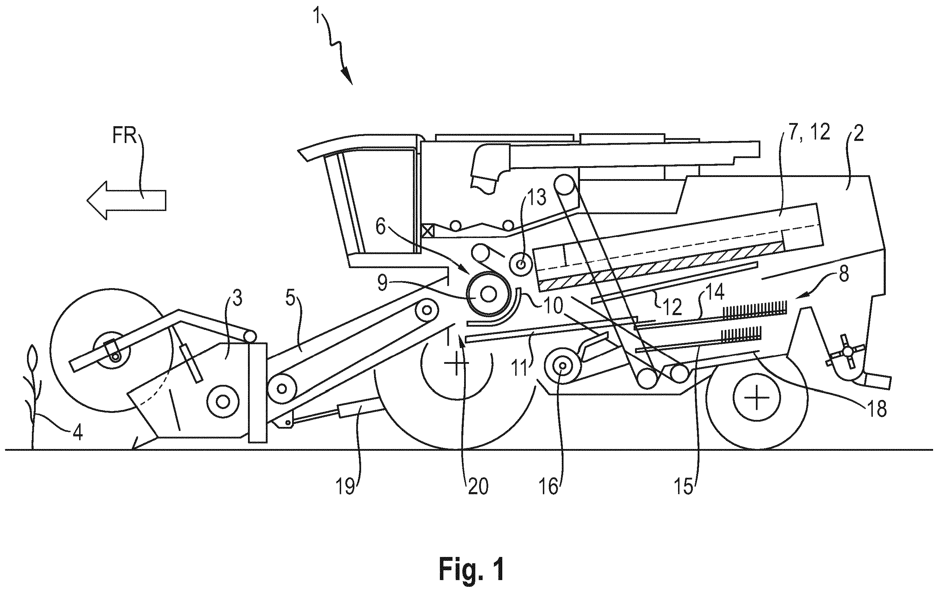

Fig. 1 zeigt eine schematische Darstellung eines selbstfahrenden Mähdreschers 1 in Seitenansicht. Der Mähdrescher 1 weist ein mit einem Fahrwerk verbundenes Traggestell auf, auf dem ein mehrteiliges Maschinengehäuse 2 befestigt ist. Der Mähdrescher 1 nimmt mit einem an einem durch Aktuatoren 19 höhenverstellbaren Einzugskanal 5 angeordneten Vorsatzgerät 3 in an sich bekannter Weise Erntegut 4 von einem Feld auf. Bezugszeichen FR bezeichnet eine Fahrtrichtung des Mähdreschers 1.

Das aufgenommene Erntegut 4 wird von einer in dem Einzugskanal 5 angeordneten Schrägfördervorrichtung einer Dresch- und Trenneinrichtung zugeführt. Die Dresch- und Trenneinrichtung umfasst eine nach dem Tangentialflussprinzip arbeitende Dreschvorrichtung 6, eine der Dreschvorrichtung 6 nachgeordnete Abscheideeinrichtung 7 und eine Siebanordnung als Teil einer Reinigungsvorrichtung 8 des Mähdreschers 1.

In der Dreschvorrichtung 6 wird das Erntegut 4 zwischen zumindest einer Dreschtrommel 9 und einem diese wenigstens teilweise ummantelnden Dreschkorb 10 hindurchgeführt und in zumindest zwei Teilströme getrennt. Der erste durch die Dreschvorrichtung abgeschiedene Teilstrom besteht im Wesentlichen aus Körnern, Kurzstroh und Spreu und wird über einen Vorbereitungsboden 11 der ein Obersieb 14 und ein Untersieb 15 umfassenden Reinigungsvorrichtung 8 zugeführt. Ein Reinigungsgebläse 16 generiert einen Luftstrom, welcher die Siebe 14, 15 durchsetzt.

Der im rückwärtigen Bereich der Dreschvorrichtung 6 aus diesem austretende weitere, im Wesentlichen aus Halmgut, insbesondere Stroh und einem Restkornanteil, bestehende zweite Teilstrom wird mittels einer Zuführtrommel 13 zu der als Axialrotor 17 ausgeführten Abscheideeinrichtung 7 geleitet. In einer alternativen Ausführungsform kann die Abscheideeinrichtung 7 auch als Hordenschüttleranordnung ausgeführt sein. Ein im Wesentlichen aus einem Gemisch aus Körnern und Ährenbruchstücken sowie Kurzstroh bestehender Erntegutstrom wird von der Abscheideeinrichtung 7 abgeschieden und über einen sogenannten Rücklaufboden 12 und den Vorbereitungsboden 11 an die Reinigungsvorrichtung 8 übergeben.

In der Reinigungsvorrichtung 8 wird schließlich in an sich bekannter Weise ein gereinigter Körnerstrom abgeschieden und über einen Auffang- und Führungsboden 18 einer Kornförderschnecke zugeführt, von wo aus er mittels eines Elevators in einen Korntank gefördert wird.

Unterhalb des Einzugskanals 5 ist im Übergangsbereich 20 zwischen dem Einzugskanal 5 und der Dreschvorrichtung 6 ein - in Fig. 1 nicht dargestelltes - Auffangbehältnis 21, eine sogenannte Steinfangmulde, angeordnet, in welches in einer Auffangposition des Auffangbehältnisses 21 im Einzugskanal 5 durch die Schrägfördervorrichtung geförderte Fremdkörper, vorrangig Steine, abscheidbar sind. Das Auffangbehältnis 21 ist, mit Ausnahme der dem Übergangsbereich 20 zugewandten Oberseite, durch welche die Fremdkörper in der Auffangposition in das Auffangbehältnis 21 gelangen, geschlossen ausgeführt.

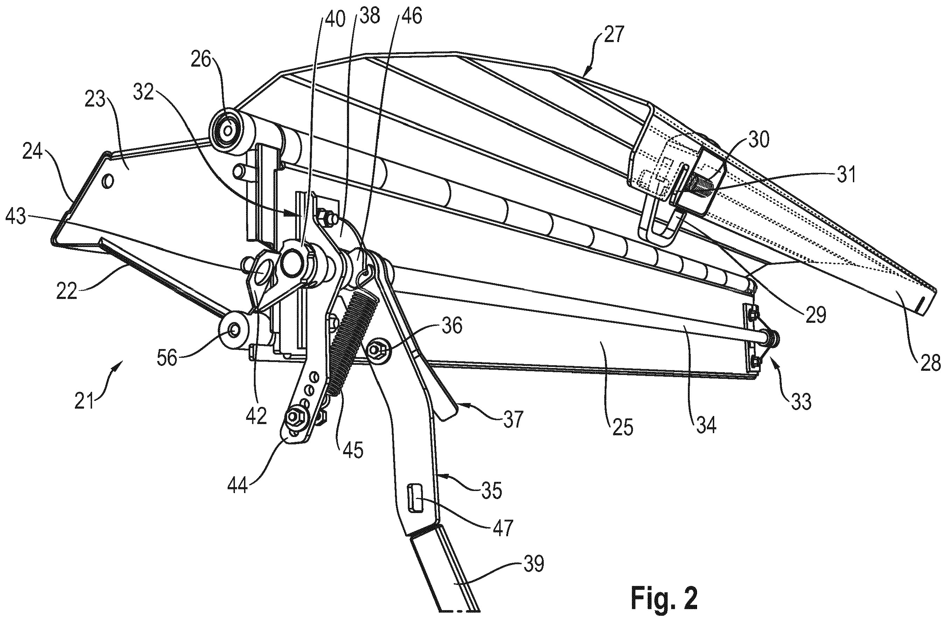

In Fig. 2 ist schematisch und exemplarisch eine perspektivische Ansicht des Auffangbehältnisses 21 in einer entriegelten Geschlossenstellung dargestellt. Das nach oben offene Auffangbehältnis 21 weist einen Boden 22, eine Rückwand 24, zwei einander gegenüberliegende, im Wesentlichen senkrecht zum Boden 22 orientierte Seitenwände 23 sowie eine Frontklappe 25 auf. Die der Boden 22 und die Rückwand 24 können einteilig ausgeführt sein, indem beispielsweise ein Abschnitt des den Boden 22 bildenden Blechmateriales abgekantet wird. Die Frontklappe 25 ist um eine Klappenschwenkachse 26 schwenkbar, um in einer Offenstellung das Entleeren des Auffangbehältnisses 21 zu ermöglichen. Die Klappenschwenkachse 26 ist an den Seitenwänden 23 angelenkt.

An der Klappenschwenkachse 26 ist ein sich über die Breite des Auffangbehältnisses 21 erstreckendes Überleitblech 27 schwenkbar angeordnet. Das Überleitblech 27 weist eine bogenförmige Kontur auf und erstreckt sich ausgehend von der Klappenschwenkachse 26 abschnittsweise in Richtung des Vorsatzgerätes 3. An seiner der Klappenschwenkachse 26 abgewandten Vorderkante des Überleitbleches 27 weist dieses einen abgekanteten Abschnitt 28 auf. An dem abgekanteten Abschnitt 28 ist innenliegend ein durch eine Druckfeder 30 mit einer Federkraft belastetes Riegelelement 29 axial verschieblich angeordnet. Das Riegelelement 29 kann durch die Druckfeder 30 mit einer Vorspannung beaufschlagt werden, welche das Riegelelement 29 in Richtung einer senkrechten Ausnehmung 31 im abgekanteten Abschnitt 28 positioniert und hält.

An der Frontklappe 25 sind randseitig zwei einander gegenüberliegende Konsolen 32, 33 angeordnet. Die Konsolen 32, 33 können mittels Schraubverbindung an der Frontklappe 25 befestigt sein. In den Konsolen 32, 33 ist eine achsparallel zur Klappenschwenkachse 26 verlaufende Welle 34 drehbar gelagert.

Mittels eines einzelnen Bedienhebels 35 ist die Frontklappe 25 um die zwischen den Seitenwänden 23 des Auffangbehältnisses 21 angelenkte Klappenschwenkachse 26 in Richtung des Einzugskanals 5 in eine Offenstellung schwenkbar.

Der Bedienhebel 35 ist auf der Welle 34 schwenkbar angeordnet. Auf der Welle 34 ist ein Hebelarm 37 drehfest angeordnet, welcher mittels eines an dem Bedienhebel 35 angeordneten Mitnehmers 36, beispielsweise einem am Bedienhebel 35 angeschraubten Bolzen, eine Schwenkbewegung des Bedienhebels 35 auf die Welle 34 überträgt.

Der Bedienhebel 35 weist einen ersten, kürzeren Hebelabschnitt 38 und einen zweiten, längeren Hebelabschnitt 39 auf. Der erste Hebelabschnitt 38 erstreckt sich ausgehend von der Welle 34 in Richtung der Klappenschwenkachse 26. Der zweite Hebelabschnitt 39 erstreckt sich ausgehend von der Welle 34 in entgegengesetzter Richtung.

An zumindest einem freien Enden der Welle 34 ist benachbart zur jeweiligen Konsole 32, 33 ein Hebelarm 40 mit einem hakenförmigen Endabschnitt 41 angeordnet. Der hakenförmige Endabschnitt 41 hintergreift in Geschlossenstellung der Frontklappe 25 einen abschnittsweise in das Innere des Auffangbehältnisses 21 ragenden, sich senkrecht zur Seitenwand 23 erstreckenden Arretierabschnitt 63. Somit wird die Frontklappe 25 in der Geschlossenstellung arretiert. Bevorzugt ist an beiden Enden der Welle 34 jeweils ein Hebelarm 40 mit einem hakenförmigen Endabschnitt 41 angeordnet. Der Arretierabschnitt 63 kann als Bolzen oder dergleichen mit einem zumindest abschnittsweise kreisfömigen Querschnitt ausgeführt sein.

An den beiden Seitenwänden 23 ist benachbart zur Frontklappe 25 jeweils eine Befestigungslasche 42 ausgebildet oder angeordnet. Die jeweilige sich senkrecht zur Seitenwand 23 erstreckenden Befestigungslasche 42 weist eine Öffnung 43 auf, welche der Hindurchführung eines - in Fig. 2 nicht dargestellten - Befestigungsmittels 57, wie einer Verschraubung, dient, um das Aufnahmebehältnis 21 am Gehäuse 50 der Dreschvorrichtung 6 lösbar zu fixieren.

Die zu dem Bedienhebel 35 benachbart angeordnete Konsole 32 weist einen zum zweiten Hebelabschnitt 39 des Bedienhebels 35 im Wesentlichen parallel verlaufenden Abschnitt 44 auf. An dem Abschnitt 44 greift endseitig eine Zugfeder 45 an, die mit ihrem gegenüberliegenden Ende an einem zwischen der Konsole 32 und dem Bedienhebel 35 drehfest auf der Welle 34 angeordneten hakenförmigen Bauteil 46 angreift. In der dargestellten Geschlossenstellung der Frontklappe 25 übt die Zugfeder 45 eine Zugkraft auf das hakenförmige Bauteil 46 aus, um die Welle 34 sowie den daran angeordneten Bedienhebel 35 gegen ein unbeabsichtigtes Verschwenken zu sichern.

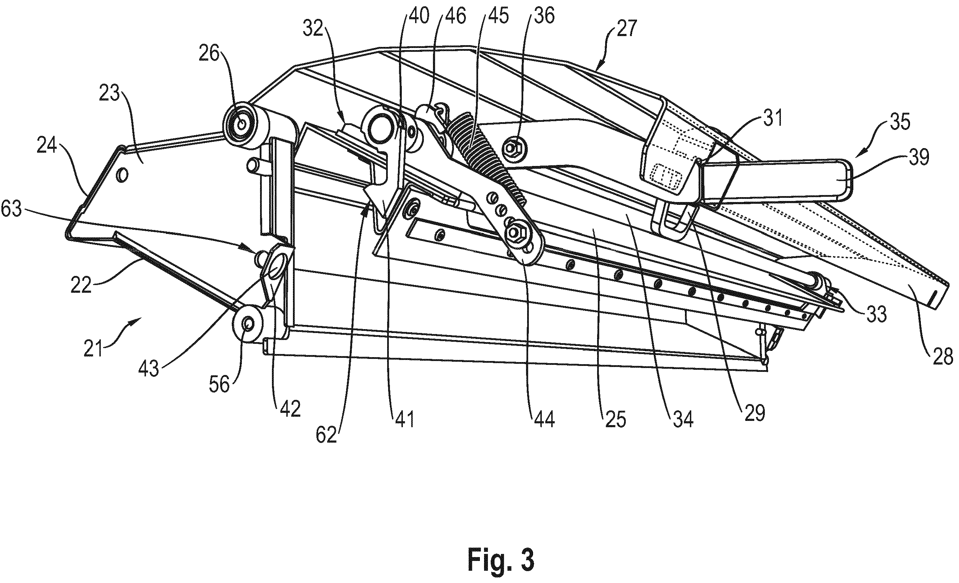

In Fig. 3 ist schematisch und exemplarisch eine perspektivische Ansicht des Auffangbehältnisses 21 nach Fig. 2 in einer Offenstellung dargestellt. Die Frontklappe 25 ist in ihrer Offenstellung an dem Überleitblech 27 arretierbar. Hierzu greift das federbelastete Riegelelement 29 abschnittsweise in eine Ausnehmung 47 am zweiten Hebelabschnitt 39 des hochgeschwenkten Bedienhebels 35 ein.

Zum Entleeren des Auffangbehältnisses 21 wird der Bedienhebel 35 in Richtung des Schrägförderers 5 bewegt, bis der erste Hebelabschnitt 38 mit einer Frontklappe 35 zugewandten Anlagefläche 48 an der Oberfläche der Frontklappe 25 anliegt. Hierzu ist die Anlagefläche 48 des ersten Hebelabschnitts 38 angeschrägt ausgeführt, wobei die Neigung der Anlagefläche 48 ausgehend von der Welle 34 zum Ende des ersten Hebelabschnitts 38 zunimmt. Das Schwenken des Bedienhebels 35 bis zur Anlage der Anlagefläche 48 an der Oberfläche der Frontklappe 25 bewirkt durch die mittels des Hebelarms 37 auf die Welle 34 übertragene Drehung das Entriegeln der Frontklappe 25.

Durch weiteres Verschwenken des Bedienhebels 35 wird dieser in die senkrechten Ausnehmung 31 im abgekanteten Abschnitt 28 eingeführt. Dabei verschiebt der Bedienhebel 35 das federbelastete Riegelelement 29 in axialer Richtung, bis die Öffnung Ausnehmung 47 am zweiten Hebelabschnitt 39 auf Höhe des Riegelelements 29 ist. Die Federkraft schiebt das Riegelelement 29 in axialer Richtung zurück in die Ausnehmung 47 hinein, wodurch die Frontklappe 25 in vollständig geöffneter Position am Überleitblech 27 arretiert wird.

Zum anschließenden Schließen des Auffangbehältnisses 21 wird das Riegelelement 29 entgegen der Federbelastung axial verschoben, so dass der Bedienhebel 35 entriegelt wird. Anschließend wird der Bedienhebel 35 um die Drehachse der Welle 34 in Richtung des Auffangbehältnisses 21 verschwenkt, bis die Frontklappe 25 am Boden 22 und den Seitenwänden 23 anliegt. Die hier und vorzugsweise zwei Hebelarme 40 mit ihren hakenförmigen Endabschnitten 41 hintergreifen in der Geschlossenstellung der Frontklappe 25 den jeweiligen Arretierabschnitt 63 an den Innenseiten der Seitenwände 23.

Zunächst wird der Bedienhebel 35 in Richtung des Auffangbehältnisses 21 verschwenkt, bis die Hebelarme 40 zunächst mit einer der Frontklappe 25 zugewandten, schräg verlaufenden Anlagefläche 62 der Endabschnitten 41 vor dem jeweiligen Arretierabschnitt anliegen. Durch ein weiteres Verschwenken des Bedienhebels 35 in Richtung des Auffangbehältnisses 21 wird der Hebelarm 40 entlang der schräg verlaufenden Anlagefläche 62 um die Drehachse der Welle 34 entgegen des von der Feder 45 aufgebrachten Drehmoments verschwenkt, bis schließlich die hakenförmigen Endabschnitte 41 aufgrund des durch die Federkraft aufgebrachten Drehmoments hinter den jeweiligen Arretierabschnitt 63 verschwenkt werden, um diese zu hintergreifen, und die Frontklappe 25 formschlüssig verriegeln. Die, insbesondere einstellbare, Vorspannkraft der Feder 45 bewirkt über den Hebelarm des hakenförmigen Bauteils 46 ein Drehmoment, welches die Hebelarme 40 in der verriegelten Position hält und somit ein versehentliches Lösen der Verriegelung vermeidet. Die von der Feder 45 ausgeübte Vorspannkraft lässt sich einstellen, indem das an dem Abschnitt 44 angreifende Ende der Feder in unterschiedlichen axialen Abständen zum hakenförmigen Bauteil 46 am Abschnitt 44 befestigt wird.

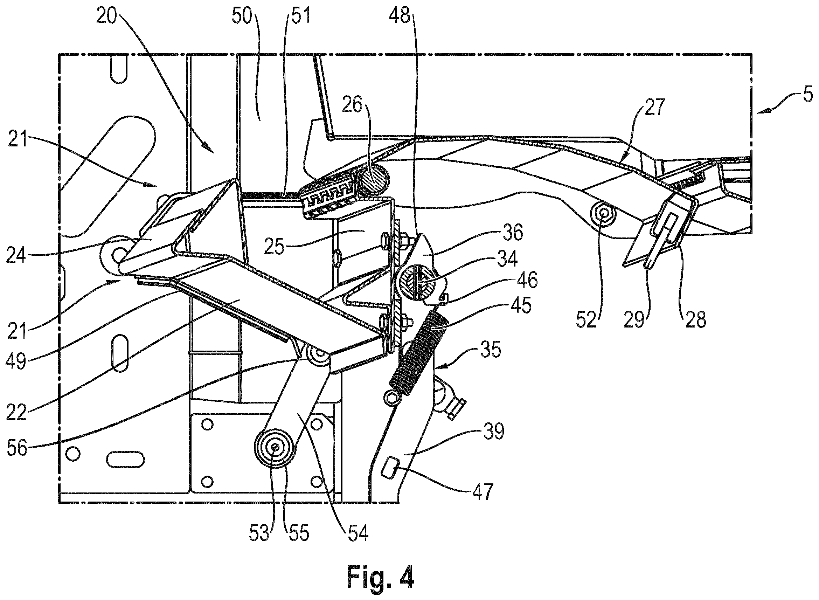

In Fig. 4 ist schematisch und exemplarisch eine Schnittansicht des Auffangbehältnisses 21 in seiner Geschlossenstellung dargestellt.

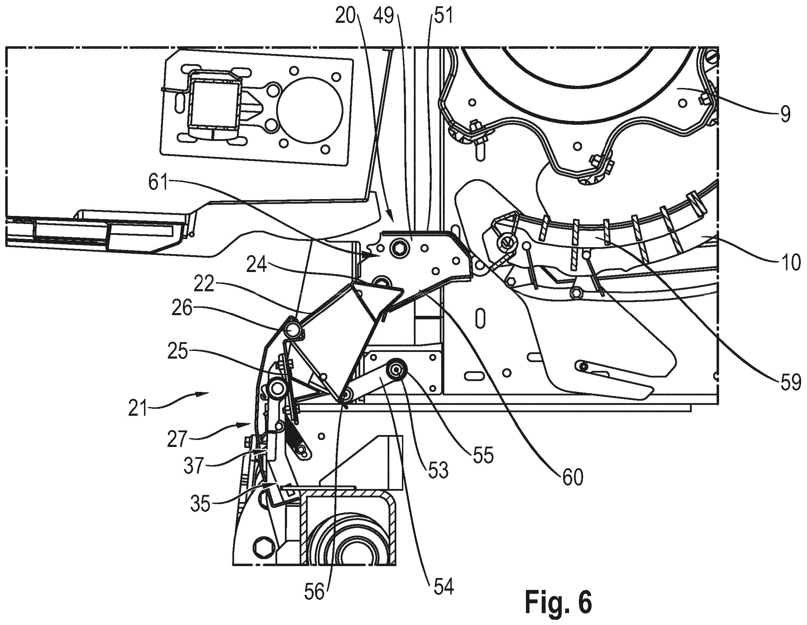

Das Auffangbehältnis 21 liegt in seiner Auffangposition zumindest bodenseitig auf einander gegenüberliegend an den Seitenwänden 50 des die Dreschvorrichtung 6 umgebenden Gehäuses angeordneten seitlichen Halterungen 49 auf. Die Halterungen 49 sind als im Wesentlichen flächige Komponenten ausgeführt, sodass diese eine nur geringe axiale Erstreckung quer zur Fahrtrichtung FR aufweisen. Die Halterungen 49 weisen Auflagesegmente 60 (Fig. 6) auf, die sich abschnittsweise quer zur Fahrtrichtung FR erstrecken. Die Halterungen 49 sind der Kontur des Auffangbehältnisses 21 entsprechend ausgebildet, sodass zumindest der Boden 22 im Wesentlichen formschlüssig auf den Auflagesegmenten 60 der Halterungen 49 aufliegt. An den Halterungen 49 sowie in Umfangsrichtung des Auffangbehältnisses 21 sind Dichtungen 51 angeordnet.

In Fig. 4 ist der Einzugskanal 5 durch Ansteuerung der Aktuatorik 19 ausgehoben dargestellt. Damit das Überleitblech 27 der Auf- und Abbewegung bei der Höhenverstellung des Einzugskanals 5 folgt, ist das Überleitblech 27 mit seinem freien Ende durch zumindest ein an der Unterseite des Einzugskanals 5 reversibel lösbar angeordnetes Führungselement 52 geführt. Das zumindest eine Führungselement 52 ist bevorzugt als Bolzen ausgeführt, welcher mittels Verschraubung an dem Einzugskanals 5 lösbar befestigt ist.

Das Auffangbehältnis 21 ist um eine horizontale, quer zur Fahrtrichtung FR verlaufende Schwenkachse 53 unterhalb des Auffangbehältnisses 21 aus der Auffangposition in eine Wartungsposition, in welcher das Auffangbehältnis 21 seinen Einbauraum 61 im Wesentlichen vollständig freigibt, verschwenkbeweglich angeordnet. Hierzu sind im Bodenbereich an den Seitenwänden 23 des Auffangbehältnisses 21 einander gegenüberliegend zwei Schwenkhebel 54 angelenkt, durch welche das Auffangbehältnis 21 um die Schwenkachse 53 schwenkbar ist. Die Schwenkhebel 54 sind jeweils in einem Gelenkpunkt 55 an der Seitenwand 50 des die Dreschvorrichtung 6 umgebenden Gehäuses und einem Gelenkpunkt 56 an der Seitenwand 32 des Auffangbehältnisses 21 angelenkt.

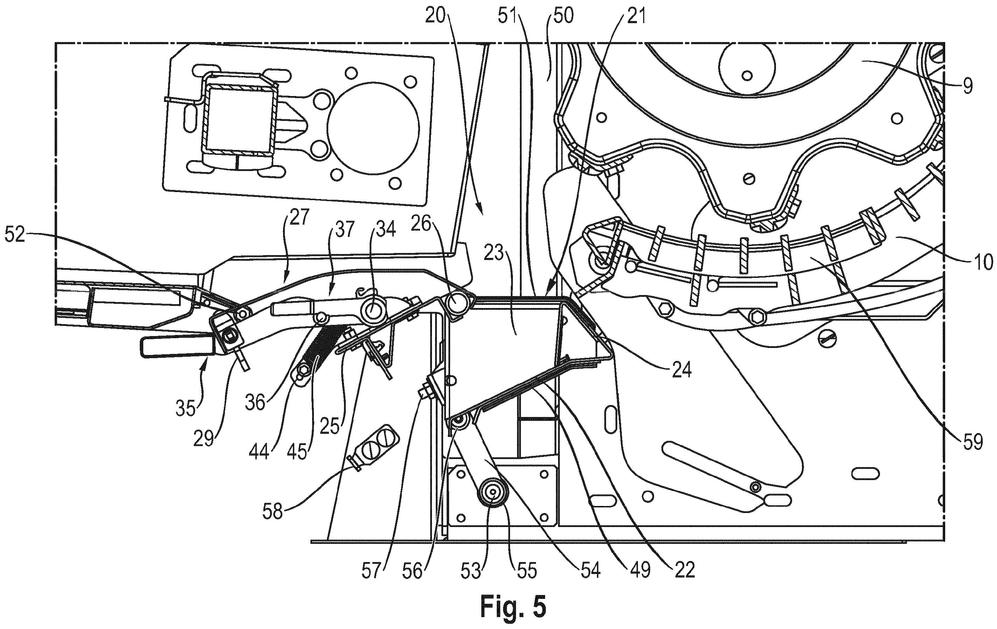

In Fig. 5 ist schematisch und exemplarisch eine Schnittansicht des Auffangbehältnisses 21 in seiner in Verbindung mit den Fig. 3 und 4 beschriebenen Offenstellung dargestellt. Der Einzugskanal 5 ist mittels der Aktuatorik 19 vollständig angehoben. Das Überleitblech 27 folgt der Bewegung des Schrägförderers 5 mittels des zumindest einen Führungselementes 52.

Um das Auffangbehältnis 21 ausgehend von der Offenstellung in seine Wartungsposition zu überführen, welche in Fig. 6 dargestellt ist, werden die Befestigungsmittel 57 sowie das zumindest eine Führungselement 52 entfernt. Das Auffangbehältnis 21 lässt sich nun, wie in Fig. 6 dargestellt in Fahrtrichtung FR herausziehen und um die Schwenkachse 53 unterhalb des Auffangbehältnisses 21 in die Wartungsposition überführen, in welcher eine sich ausbildende Wartungsöffnung zum Herausnehmen zumindest eines vorderen Dreschkorbsegmentes 59 des Dreschkorbs 10 freigibt.

In der Wartungsposition liegt das Auffangbehältnis 21 an einem unterhalb der Schwenkachse 53 an einem Wandabschnitt des Maschinengehäuses 2 des Mähdreschers 1 angeordneten Anschlag 58 an.

Das erfindungsgemäß ausgestaltete Auffangbehältnis 21 ermöglicht es, die Frontklappe 25 einhändig zu bedienen. Zudem lässt sich die Frontklappe 25 arretieren, sodass die Bedienperson beim Entleeren davon entlastet ist, die Frontklappe 25 festzuhalten. Durch die beidseitige, formschlüssige Verriegelung der Frontklappe 25 mittels der hakenförmigen Endabschnitt 41 wird die Frontklappe 25 auch unter starker Belastung zuverlässig geschlossen gehalten und bleibt somit Korndicht. Wird der Einzugskanal 5 bei geöffneter Frontklappe 25 höhenverstellt, wird eine Kollision beider Baugruppen verhindert, indem die Arretierung der Frontklappe 25 an dem Überleitblech 27 entsprechend der Bewegung des Einzugskanals 5 folgt. Zudem erlaubt der Sitz des Auffangbehältnisses 21 mittels der umlaufenden Dichtung 51 an der Halterung 49 einen Toleranzausgleich in Querrichtung des Mähdreschers 1, wodurch Fertigungstoleranzen ausgeglichen werden können und gleichzeitig funktionssicher gegen Rieselkörner abgedichtet werden kann.

**Bezugszeichenliste**

| | | | |
|---|---|---|---|
| 1 | Mähdrescher | 34 | Welle |
| 2 | Maschinengehäuse | 35 | Bedienhebel |
| 3 | Vorsatzgerät | 36 | Mitnehmer |
| 4 | Erntegut | 37 | Hebelarm |
| 5 | Einzugskanal | 38 | Erster Hebelabschnitt |
| 6 | Dreschvorrichtung | 39 | Zweiter Hebelabschnitt |
| 7 | Abscheidevorrichtung | 40 | Hebelarm |
| 8 | Reinigungsvorrichtung | 41 | Hakenförmiger Endabschnitt |
| 9 | Dreschtrommel | 42 | Befestigungslasche |
| 10 | Dreschkorb | 43 | Öffnung von 42 |
| 11 | Vorbereitungsboden | 44 | Abschnitt |
| 12 | Rücklaufboden | 45 | Zugfeder |
| 13 | Zuführtrommel | 46 | hakenförmiges Bauteil |
| 14 | Obersieb | 47 | Ausnehmung |
| 15 | Untersieb | 48 | Anlagefläche |
| 16 | Reinigungsgebläse | 49 | Halterung |
| 17 | Axialrotor | 50 | Seitenwand von 6 |
| 18 | Auffang- und Führungsboden | 51 | Dichtung |
| 19 | Aktuatorik | 52 | Führungselement |
| 20 | Übergangsbereich | 53 | Schwenkachse |
| 21 | Auffangbehältnis | 54 | Schwenkhebel |
| 22 | Boden | 55 | Gelenkpunkt |
| 23 | Seitenwand | 56 | Gelenkpunkt |
| 24 | Rückwand | 57 | Befestigungsmittel |
| 25 | Frontklappe | 58 | Anschlag |
| 26 | Klappenschwenkachse | 59 | Dreschkorbsegment |
| 27 | Überleitblech | 60 | Auflagesegment |
| 28 | Abgekanteter Abschnitt von 27 | 61 | Einbauraum von 21 |
| 29 | Riegelelement | 62 | Anlagefläche |
| 30 | Druckfeder | 63 | Arretierabschnitt |
| 31 | Ausnehmung | FR | Fahrtrichtung |
| 32 | Konsole | | |
| 33 | Konsole | | |

## Patentansprüche

1. Selbstfahrender Mähdrescher (1), umfassend einen durch Aktuatoren (19) höhenverstellbaren Einzugskanal (5), eine dem Einzugskanal (5) nachgeordnete Dreschvorrichtung (6), welche zumindest eine Dreschtrommel (9) und zumindest einen die Dreschtrommel (9) abschnittsweise umhüllenden Dreschkorb (10) aufweist, sowie ein unterhalb des Einzugskanals (5) im Übergangsbereich (20) zwischen dem Einzugskanal (5) und der Dreschvorrichtung (6) angeordnetes Auffangbehältnis (21), in welches in einer Auffangposition des Auffangbehältnisses (21) im Einzugskanal (5) mitgeförderte Fremdkörper abscheidbar sind, wobei das Auffangbehältnis (21) aus dem Übergangsbereich (20) in Fahrtrichtung (FR) entfernbar ist, **dadurch gekennzeichnet, dass** das Auffangbehältnis (21) um eine horizontale, quer zur Fahrtrichtung (FR) verlaufende Schwenkachse (53) unterhalb des Auffangbehältnisses (21) aus der Auffangposition in eine Wartungsposition, in welcher das Auffangbehältnis (21) seinen Einbauraum (61) im Wesentlichen vollständig freigibt, verschwenkbeweglich angeordnet ist, sodass das Auffangbehältnis (21) nach dem Verschwenken in die Wartungsposition eine sich dabei ausbildende Wartungsöffnung zum Herausnehmen zumindest eines der vorderen Dreschkorbsegmente (59) des Dreschkorbs (10) freigibt, wobei im Bodenbereich an den Seitenwänden (23) des Auffangbehältnisses (21) einander gegenüberliegend zwei Schwenkhebel (54) angelenkt sind, durch welche das Auffangbehältnis (21) um die Schwenkachse (53) schwenkbar ist.

2. Mähdrescher (1) nach Anspruch 1, **dadurch gekennzeichnet, dass** das Auffangbehältnis (21) in seiner Auffangposition zumindest bodenseitig auf an einander gegenüberliegend angeordneten seitlichen Halterungen (49) angeordneten oder ausgebildeten horizontalen Auflagesegmenten (60), die sich abschnittsweise quer zur Fahrtrichtung (FR) erstrecken, aufliegt.

3. Mähdrescher (1) nach Anspruch 1 oder 2, **dadurch gekennzeichnet, dass** das Auffangbehältnis (21) eine mittels eines einzelnen Bedienhebels (35) betätigbare Frontklappe (25) aufweist, welche um eine zwischen Seitenwänden (23) des Auffangbehältnisses (21) angelenkte Klappenschwenkachse (26) in Richtung des Einzugskanals (5) in eine Offenstellung schwenkbar ist.

4. Mähdrescher (1) nach Anspruch 3, **dadurch gekennzeichnet, dass** an der Klappenschwenkachse (26) ein sich über die Breite des Auffangbehältnisses (21) erstreckendes Überleitblech (27) schwenkbar angeordnet ist, welches mit seinem freien Ende durch zumindest ein an der Unterseite des Einzugskanals (5) reversibel lösbar angeordnetes Führungselement (52) geführt ist, um der Bewegung des Einzugskanals (5) bei einer Höhenverstellung zu folgen.

5. Mähdrescher (1) nach Anspruch 4, **dadurch gekennzeichnet, dass** die Frontklappe (25) in Offenstellung an dem Überleitblech (27) arretierbar ist.

6. Mähdrescher (1) nach Anspruch 3 bis 5, **dadurch gekennzeichnet, dass** an der Frontklappe (25) randseitig zwei einander gegenüberliegende Konsolen (32, 33) angeordnet sind, in denen eine achsparallel zur Klappenschwenkachse (26) verlaufende Welle (34) drehbar gelagert ist, auf welcher der Bedienhebel (35) schwenkbar angeordnet ist, sowie dass auf der Welle (34) ein Hebelarm (37) drehfest angeordnet ist, welcher mittels eines an dem Bedienhebel (35) angeordneten Mitnehmers (36) eine Schwenkbewegung des Bedienhebels (35) auf die Welle (34) überträgt.

7. Mähdrescher (1) nach Anspruch 6, **dadurch gekennzeichnet, dass** der Bedienhebel (35) einen ersten, kürzeren Hebelabschnitt (38) und einen zweiten, längeren Hebelabschnitt (39) aufweist, wobei der erste Hebelabschnitt (38) sich ausgehend von der Welle (34) in Richtung der Klappenschwenkachse (26) erstreckt und der zweite Hebelabschnitt (39) sich ausgehend von der Welle (34) in entgegengesetzter Richtung erstreckt.

8. Mähdrescher (1) nach Anspruch 7, **dadurch gekennzeichnet, dass** der erste Hebelabschnitt (38) eine der Frontklappe (25) zugewandte, angeschrägte Anlagefläche (48) aufweist, wobei die Neigung der Anlagefläche (48) ausgehend von der Welle (34) zum äußeren Ende des ersten Hebelabschnitts (38) zunimmt.

9. Mähdrescher (1) nach einem der Ansprüche 4 bis 8, **dadurch gekennzeichnet, dass** an dem Überleitblech (27) an seiner der Klappenschwenkachse (26) abgewandten Vorderkante ein federbelastetes Riegelelement (29) axial verschieblich angeordnet ist, welches mit dem Bedienhebel (35) in Offenstellung der Frontklappe (25) arretierend in Eingriff steht.

10. Mähdrescher (1) nach einem der Ansprüche 5 bis 9 **dadurch gekennzeichnet, dass** an zumindest einem freien Ende der Welle (34) benachbart zur jeweiligen Konsole (32, 33) zumindest ein Hebelarm (40) mit einem hakenförmigen Endabschnitt (41) angeordnet ist, welcher in Geschlossenstellung der Frontklappe (25) einen abschnittsweise in das Innere des Auffangbehältnisses (21) ragenden, sich senkrecht zur Seitenwand (23) erstreckenden Arretierabschnitt hintergreift und die Frontklappe (25) somit in der Geschlossenstellung arretiert.

11. Mähdrescher (1) nach Anspruch 8 bis 10, **dadurch gekennzeichnet, dass** die zu dem Bedienhebel (35) benachbart angeordnete Konsole (32) einen zum zweiten Hebelabschnitt (39) im Wesentlichen parallel verlaufenden Abschnitt (44) aufweist, an welchem endseitig eine Zugfeder (45) angreift, die mit ihrem gegenüberliegenden Ende an einem zwischen der Konsole (32) und dem Bedienhebel (35) drehfest auf der Welle (34) angeordneten Bauteil (46) angreift.

12. Mähdrescher (1) nach einem der vorangehenden Ansprüche, **dadurch gekennzeichnet, dass** das Auffangbehältnis (21) mit den seitlichen Halterung (49) durch Befestigungsmittel (57), insbesondere Schraubverbindungen, lösbar verbunden ist.

13. Mähdrescher (1) nach Anspruch 12, **dadurch gekennzeichnet, dass** zum Verschwenken des Auffangbehältnisses (21) in die Wartungsposition das Auffangbehältnis (21) zunächst in die Offenstellung zu überführen ist, dass anschließend die Befestigungsmittel (57) und das zumindest eine Führungselement (52) zu lösen und zu entfernen sind, so dass das Auffangbehältnis (21) aus den seitlichen Halterungen (49) herausbewegbar und abschnittsweise um die Schwenkachse (53) schwenkbar ist, bis das Auffangbehältnis (21) an einem unterhalb der Schwenkachse (53) angeordneten Anschlag (58) an einem Wandabschnitt des Mähdreschers (1) anliegt.

## Claims

1. A self-propelled combine harvester (1), comprising an intake channel (5) the height of which can be adjusted by actuators (19), a threshing device (6) disposed downstream of the intake channel (5) and which has at least one threshing drum (9) and at least one threshing concave (10) which encloses the threshing drum (9) in sections, as well as a collecting receptacle (21) disposed below the intake channel (5) in the transitional region (20) between the intake channel (5) and the threshing device (6), into which collecting receptacle, in a collecting position of the collecting receptacle (21), foreign bodies entrained in the intake channel (5) can be separated, wherein the collecting receptacle (21) can be removed from the transitional region (20) in the direction of travel (FR), **characterized in that** the collecting receptacle (21) is pivotably disposed for movement about a horizontal pivot axis (53) extending transversely to the direction of travel (FR) and below the collecting receptacle (21) out of the collecting position into a maintenance position in which the installation space (61) of the collecting receptacle (21) is substantially completely vacated, so that after pivoting into the maintenance position, the collecting receptacle (21) exposes a maintenance opening which is formed thereby in order to remove at least one of the front threshing concave segments (59) of the threshing concave (10), wherein in the ground region, two pivot levers (54) which are opposite to each other are articulated on the side walls (23) of the collecting receptacle (21), by which pivot levers the collecting receptacle (21) can be pivoted about the pivot axis (53).

2. The combine harvester (1) according to claim 1, **characterized in that** in its collecting position, at least on the ground side, the collecting receptacle (21) is supported on horizontal support segments (60) which extend in sections transversely to the direction of travel (FR) and which are disposed or formed on lateral holders (49) disposed opposite to each other.

3. The combine harvester (1) according to claim 1 or claim 2, **characterized in that** the collecting receptacle (21) has a front flap (25) which can be actuated by means of a single operating lever (35) and which can be pivoted in the direction of the intake channel (5) into an open position about a flap pivot axis (26) articulated between side walls (23) of the collecting receptacle (21).

4. The combine harvester (1) according to claim 3, **characterized in that** a transfer plate (27) extending over the width of the collecting receptacle (21) is pivotably disposed on the flap pivot axis (26), the free end of which transfer plate being guided by at least one guide element (52) which is reversibly detachably disposed on the underside of the intake channel (5) in order to follow the movement of the intake channel (5) in the event of a height adjustment.

5. The combine harvester (1) according to claim 4, **characterized in that** in the open position, the front flap (25) can be locked on the transfer plate (27).

6. The combine harvester (1) according to claims 3 to 5, **characterized in that** two brackets (32, 33) are disposed on the front flap (25) on the edge side opposite to each other, in which brackets a shaft (34) is rotatably mounted with its axis extending parallel to the flap pivot axis (26), on which shaft the operating lever (35) is pivotably disposed, and **in that** a lever arm (37) is disposed on the shaft (34) in a manner which is fixed against rotation, which lever arm transmits a pivotal movement of the operating lever (35) onto the shaft (34) by means of a driving pin (36) disposed on the operating lever (35).

7. The combine harvester (1) according to claim 6, **characterized in that** the operating lever (35) has a first, shorter lever section (38) and a second, longer lever section (39), wherein the first lever section (38) extends from the shaft (34) in the direction of the flap pivot axis (26) and the second lever section (39) extends from the shaft (34) in the opposite direction.

8. The combine harvester (1) according to claim 7, **characterized in that** the first lever section (38) has an oblique support surface (48) facing the front flap (25), wherein the inclination of the support surface (48) increases from the shaft (34) to the outer end of the first lever section (38).

9. The combine harvester (1) according to one of claims 4 to 8, **characterized in that** a spring-loaded latch element (29) is axially displaceably disposed on the transfer plate (27) on its forward edge facing away from the flap pivot axis (26), which latch element is in locking engagement with the operating lever (35) in the open position of the front flap (25).

10. The combine harvester (1) according to one of claims 5 to 9, **characterized in that** at least one lever arm (40) with a hook-shaped end section (41) is disposed on at least one free end of the shaft (34) adjacent to the respective bracket (32, 33), which end section, in the closed position of the front flap (25), engages behind a locking section which protrudes in sections into the interior of the collecting receptacle (21) at right angles to the side wall (23) and thereby locks the front flap (25) in the closed position.

11. The combine harvester (1) according to claims 8 to 10, **characterized in that** the bracket (32) disposed adjacent to the operating lever (35) has a section (44) which extends substantially parallel to the second lever section (39), on the end of which section a tension spring (45) engages, the opposite end of which engages on a component (46) which is disposed on the shaft (34) in a manner which is fixed against rotation between the bracket (32) and the operating lever (35).

12. The combine harvester (1) according to one of the preceding claims, **characterized in that** the collecting receptacle (21) is detachably connected to the lateral holder (49) by fastening means (57), in particular screw connections.

13. The combine harvester (1) according to claim 12, **characterized in that**, in order to pivot the collecting receptacle (21) into the maintenance position, firstly, the collecting receptacle (21) is transposed into the open position, **in that** subsequently, the fastening means (57) and the at least one guide element (52) are released and removed, so that the collecting receptacle (21) can be moved out of the lateral holders (49) and can be pivoted about the pivot axis (53) in sections until the collecting receptacle (21) bears against a stop (58) disposed below the pivot axis (53) on a wall section of the combine harvester (1).

## Revendications

1. Moissonneuse-batteuse (1) automotrice, comprenant un canal d'alimentation (5) réglable en hauteur par des actionneurs (19), un dispositif batteur (6) qui est placé à la suite du canal d'alimentation (5) et présente au moins un tambour batteur (9) et au moins un contre-batteur (10) enveloppant par portions le tambour batteur (9), ainsi qu'un récipient collecteur (21) qui est disposé en-dessous du canal d'alimentation (5), dans la zone de transition (20) entre le canal d'alimentation (5) et le dispositif batteur (6), et vers lequel, dans une position de collecte du récipient collecteur (21), des corps étrangers entraînés dans le canal d'alimentation (5) peuvent être séparés, le récipient collecteur (21) pouvant être retiré de la zone de transition (20) dans le sens de l'avancement (FR), **caractérisée en ce que** le récipient collecteur (21) est disposé avec possibilité de pivotement autour d'un axe de pivotement (53) horizontal, situé en-dessous du récipient collecteur (21) et s'étendant transversalement à la direction d'avancement (FR), de manière à passer de la position de collecte à une position d'entretien dans laquelle le récipient collecteur (21) libère sensiblement entièrement son espace de montage (61), de sorte qu'après le pivotement dans la position d'entretien, le récipient collecteur (21) libère une ouverture d'entretien ainsi formée, afin de retirer au moins un des segments (59) avant du contre-batteur (10), sachant que dans la région du fond, deux leviers pivotants (54) sont articulés sur les parois latérales (23) du récipient collecteur (21), en vis-à-vis l'un de l'autre, qui permettent de faire pivoter le récipient collecteur (21) autour de l'axe de pivotement (53).

2. Moissonneuse-batteuse (1) selon la revendication 1, **caractérisée en ce que**, dans sa position de collecte, le récipient collecteur (21) repose au moins côté fond sur des segments d'appui (60) horizontaux qui sont disposés ou réalisés sur des supports (49) latéraux placés mutuellement en vis-à-vis, et qui s'étendent par portions transversalement à la direction de déplacement (FR).

3. Moissonneuse-batteuse (1) selon la revendication 1 ou 2, **caractérisée en ce que** le récipient collecteur (21) présente un volet frontal (25) qui peut être actionné au moyen d'un levier de manœuvre (35) individuel et peut pivoter en direction du canal d'alimentation (5), dans une position ouverte, autour d'un axe de pivotement de volet (26) articulé entre des parois latérales (23) du récipient collecteur (21).

4. Moissonneuse-batteuse (1) selon la revendication 3, **caractérisée en ce qu'**il est prévu sur l'axe de pivotement de volet (26), avec possibilité de pivotement, une tôle de transfert (27) qui s'étend sur la largeur du récipient collecteur (21) et est guidée avec son extrémité libre par au moins un élément de guidage (52) disposé de façon amovible réversible sur la face inférieure du canal d'alimentation (5), afin de suivre le mouvement du canal d'alimentation (5) lors d'un réglage en hauteur.

5. Moissonneuse-batteuse (1) selon la revendication 4, **caractérisée en ce que** dans la position ouverte, le volet frontal (25) peut être verrouillé sur la tôle de transfert (27).

6. Moissonneuse-batteuse (1) selon la revendication 3 à 5, **caractérisée en ce que**, sur le volet frontal (25), sont disposées côté bords, mutuellement en vis-à-vis, deux consoles (32, 33) dans lesquelles est monté tournant un arbre (34) dont l'axe s'étend parallèlement à l'axe de pivotement de volet (26) et sur lequel le levier de manœuvre (35) est monté avec possibilité de pivotement, et **en ce qu'**un bras de levier (37) est monté solidaire en rotation sur l'arbre (34) et transmet un mouvement pivotant du levier de manœuvre (35) à l'arbre (34), au moyen d'un élément d'entraînement (36) disposé sur le levier de manœuvre (35).

7. Moissonneuse-batteuse (1) selon la revendication 6, **caractérisée en ce que** le levier de manœuvre (35) présente une première partie de levier (38) plus courte et une deuxième partie de levier (39) plus longue, la première partie de levier (38) s'étendant à partir de l'arbre (34) en direction de l'axe de pivotement de volet (26), et la deuxième partie de levier (39) s'étendant à partir de l'arbre (34), dans le sens opposé.

8. Moissonneuse-batteuse (1) selon la revendication 7, **caractérisée en ce que** la première partie de levier (38) présente une surface d'appui (48) oblique tournée vers le volet frontal (25), l'inclinaison de la surface d'appui (48) augmentant à partir de l'arbre (34), en direction de l'extrémité extérieure de la première partie de levier (38).

9. Moissonneuse-batteuse (1) selon une des revendications 4 à 8, **caractérisée en ce qu'**un élément de verrouillage (29) sollicité par ressort est disposé avec possibilité de déplacement axial sur la tôle de transfert (27), sur son bord avant éloigné de l'axe de pivotement de volet (26), et est en prise de verrouillage avec le levier de manœuvre (35) lorsque le volet frontal (25) est en position ouverte.

10. Moissonneuse-batteuse (1) selon une des revendications 5 à 9, **caractérisée en ce qu'**au moins un bras de levier (40), doté d'une partie d'extrémité (41) en forme de crochet, est disposé sur au moins une extrémité libre de l'arbre (34), à proximité de la console (32, 33) respective, laquelle partie d'extrémité, dans la position fermée du volet frontal (25), s'engage derrière une partie de verrouillage avançant en partie à l'intérieur du récipient collecteur (21) et s'étendant perpendiculairement à la paroi latérale (23), bloquant ainsi le volet frontal (25) dans la position fermée.

11. Moissonneuse-batteuse (1) selon la revendications 8 à 10, **caractérisée en ce que** la console (32) disposée à proximité du levier de manœuvre (35) présente une partie (44) qui s'étend de manière sensiblement parallèle à la deuxième partie de levier (39) et sur laquelle est en prise, côté extrémité, un ressort de traction (45) qui est en prise avec son extrémité opposée sur un composant (46) disposé de manière solidaire en rotation sur l'arbre (34), entre la console (32) et le levier de manœuvre (35).

12. Moissonneuse-batteuse (1) selon une des revendications précédentes, **caractérisée en ce que** le récipient collecteur (21) est relié de façon amovible aux supports (49) latéraux par des moyens de fixation (57), notamment des assemblages à vis.

13. Moissonneuse-batteuse (1) selon la revendication 12, **caractérisée en ce que** pour le pivotement du récipient collecteur (21) dans la position d'entretien, le récipient collecteur (21) doit d'abord être amené dans la position ouverte, **en ce qu'**ensuite les moyens de fixation (57) et l'élément de guidage (52), au nombre d'au moins un, doivent être libérés et retirés, de manière à ce que le récipient collecteur (21) puisse être déplacé hors des supports (49) latéraux et puisse pivoter par portions autour de l'axe de pivotement (53), jusqu'à ce que le récipient collecteur (21) soit en appui contre une butée (58) située en-dessous de l'axe de pivotement (53), sur une partie de paroi de la moissonneuse-batteuse (1).
